# EUROPÄISCHE PATENTANMELDUNG

(11) **EP 2 690 584 A1**
(43) Veröffentlichungstag der Anmeldung: **29.01.2014**
(21) Anmeldenummer: 13003477.0
(22) Anmeldetag: 10.07.2013
(51) Int. Cl.: G06K 19/077

(54) **Verfahren zur Herstellung eines Chipmoduls**

(30) Priorität: 24.07.2012 DE 102012014604
(71) Anmelder: Giesecke & Devrient GmbH, 81677 München (DE)
(72) Erfinder: Tarantino, Thomas, 83410 Laufen (DE)

(57) **Zusammenfassung**

Die vorliegende Erfindung offenbart ein Verfahren zur Herstellung eines Chipmoduls (2) für einen tragbaren Datenträger (8), welches sich dadurch auszeichnet, dass auf der Seitenfläche des Moduls (2) ein Sicherheitselement (7) angeordnet wird, die sich nach Einbau des Moduls (2) in den Datenträger (8) auf der Außenseite des Datenträgers (8) befindet und von außen zu erkennen ist. Ferner offenbart die Erfindung einen entsprechenden Datenträger (8), welcher ein Chipmodul (2) aufweist, das ein von außen erkennbares Sicherheitselement (7) hat.

## Beschreibung

Die Erfindung offenbart ein Verfahren zur Herstellung eines Chipmoduls, insbesondere eines individualisierten Chipmoduls und eines Datenträgers, welcher ein entsprechendes Chipmodul aufweist.

Aus dem Stand der Technik sind Chipmodule für tragbare Datenträger, wie z.B. Identitätskarten, Pässe, Ausweise, SIM-Karten, Kreditkarten etc. für kontaktlose und kontaktbehaftete Kontaktierung bekannt.

Die Chipmodule werden während eines Herstellungsprozesses eines tragbaren Datenträgers in den Datenträger implantiert.

Problematisch ist, dass eine Individualisierung von Chipmodulen sehr kostenintensiv ist. Ferner gibt es neben dem Chip kein weiteres Sicherheitselement auf dem Chipmodul, welches beispielsweise eine Fälschung des Chipmoduls zumindest erschwert bzw. auch als ein Designelement dient.

Aufgabe der Erfindung ist es deshalb eine Individualisierung und einen Schutz vor Fälschung eines Chipmoduls, zu verbessern.

Die Aufgabe der Erfindung wird durch den unabhängigen Anspruch und die nebengeordneten Ansprüche gelöst. Vorteilhafte Ausführungen sind in den abhängigen Ansprüchen beschrieben.

Die Aufgabe wird gelöst durch ein Verfahren zur Herstellung eines Chipmoduls für einen tragbaren Datenträger, welches sich dadurch auszeichnet, dass auf der Seitenfläche des Moduls ein Sicherheitselement angeordnet wird, die sich vorteilhafterweise nach Einbau des Moduls in den Datenträger auf der Außenseite des Datenträgers befindet und von außen zu erkennen ist. Alternativ dazu kann sich das Sicherheitselement auch auf der Seite des Moduls befinden, die sich nach Einbau des Moduls in den Datenträger auf der Innenseite des Datenträgers befindet und somit von außen nicht sichtbar ist, sondern erst nach Ausbau des Moduls aus dem Datenträger sichtbar ist. Somit ist sowohl am Chipmodul vor als auch nach dem Einbau in einen tragbaren Datenträger erkennbar, um welches Chipmodul es sich hier handelt, bzw. ob es sich bei dem vorliegenden Chipmodul um eine Fälschung handelt. Darüberhinaus lässt sich auf das Sicherheitselement zusätzlich ein Design z.B. in Form von Zahlen, Buchstaben, Symbolen, Zeichen, Figuren, etc. aufbringen.

Ein vorteilhaftes Ausführungsbeispiel zeichnet sich dadurch aus, dass sich das Sicherheitselement mindestens über einen Teil der von außen zu erkennenden Fläche des Moduls erstreckt. Vorteilhafterweise erstreckt sich das Sicherheitsmodul über die gesamte Länge der von außen erkennbaren Fläche des Moduls. Das Sicherheitselement kann dabei in einem Stück oder in mehreren Teilstücken, z.B. vergleichbar einer gestrichelten Linie, auf der Seitenfläche des Moduls angeordnet werden. Auch sind beliebige Formen möglich, wie das Sicherheitselement auf der Seitenfläche angeordnet wird, z.B. als gerade Linie, in Wellenform, in Kreisform, als Viereck, als Dreieck etc..

Ein weiteres vorteilhaftes Ausführungsbeispiel zeichnet sich dadurch aus, dass in der von außen zu erkennenden Fläche des Moduls das Sicherheitselement und mindestens ein elektrisch leitfähiger Kontakt angeordnet werden. Dies hat den Vorteil, dass die Erfindung auch für Chipmodule geeignet ist, welche auf der von außen erkennbaren Seitenfläche des Moduls z.B. ein Kontaktflächenfeld mit acht Kontaktflächen gemäß ISO 7816 aufweisen. Die vorliegende Erfindung ist darüber hinaus auch für Chipmodule verwendbar, welche für eine kontaktlose Kommunikation bzw. für sowohl eine kontaktgebundene als auch eine kontaktlose Kommunikation eingerichtet sind. Für den Fall einer kontaktlosen Kommunikation kann das Sicherheitselement unter einem Sichtfenster aus z.B. Kunststoff angeordnet werden und als z.B. Echtheitsmerkmal dienen.

Ein weiteres vorteilhaftes Ausführungsbeispiel zeichnet sich dadurch aus, dass das Sicherheitselement neben und/ oder über dem mindestens einen Kontakt angeordnet wird. Dies hat den Vorteil, dass das erfindungsgemäße Sicherheitselement beispielsweise neben den Kontaktflächen gemäß ISO-7816 auf der erkennbaren Seitenfläche des Chipmoduls angeordnet werden kann, beispielsweise in Bereichen, welche von den Kontakten nicht belegt sind. Alternativ kann das Sicherheitselement auch auf bzw. über den Kontakten angeordnet werden. Allerdings ist dann darauf zu achten, dass trotz Sicherheitselement eine sichere Kontaktierung der unter dem Sicherheitselement angeordneten Kontakte gewährleistet ist, beispielsweise mittels Durchgangslöchern durch das Sicherheitselement, wobei die Durchgangslöcher über den Kontakten angeordnet sind. Alternativ kann das Sicherheitselement an den Stellen der oben genannten Durchgangslöcher auch ein leitendes Material aufweisen, welches eine elektrisch leitfähige Verbindung zwischen den Kontakten und den entsprechenden Stellen auf der Oberfläche des Sicherheitselementes bildet. Zur Vermeidung von Kurzschlüssen ist das leitende Material über den Kontakten mittels einer Isolationsschicht umgeben.

Ein weiteres vorteilhaftes Ausführungsbeispiel zeichnet sich dadurch aus, dass das Sicherheitselement so über dem mindestens einen Kontakt angeordnet wird, dass mittels mindestens eines Durchgangslochs durch das Sicherheitselement hindurch mit dem darunterliegenden mindestens einen Kontakt eine leitende elektrische Verbindung hergestellt werden kann.

Ein weiteres vorteilhaftes Ausführungsbeispiel zeichnet sich dadurch aus, dass das Sicherheitselement in einer Vertiefung des Moduls angeordnet wird. Das Sicherheitselement kann beispielsweise in einer Nut der sichtbaren Fläche des Chipmoduls angeordnet werden. Vorteilhaft ist, wenn das Sicherheitselement mit der übrigen sichtbaren und umgebenden Fläche des Chipmoduls eine ebene Oberfläche bildet. Somit kann eine glatte und ebene Oberfläche auf dem Datenträger erzeugt werden. Alternativ ist es möglich, wenn das Sicherheitsmodul mit der übrigen umgebenden Fläche des Chipmoduls keine ebene Fläche bildet. Dies bedeutet, dass die Oberfläche des Sicherheitselements über oder unter der übrigen umgebenden Fläche des Chipmoduls liegt. Dies kann vorteilhaft zur haptischen Erkennung des Datenträgers, insbesondere des Chipmoduls genutzt werden, z.B. als Alternative zur Brailleschrift für blinde oder sehbehinderte Menschen oder für eine maschinelle Erkennung des Datenträgers bzw. dessen Chipmoduls.

Ein weiteres vorteilhaftes Ausführungsbeispiel zeichnet sich dadurch aus, dass das Sicherheitselement von dem mindestens einen Kontakt elektrisch isoliert wird. Dies ist besonders dann wichtig, wenn das Sicherheitselement elektrisch leitfähig ist. Durch die Isolation zwischen Sicherheitselement und mindestens einem Kontakt wird somit ein Kurzschluss vermieden.

Ein weiteres vorteilhaftes Ausführungsbeispiel zeichnet sich dadurch aus, dass die Dicke des Sicherheitselements kleiner oder gleich oder größer als die Dicke einer Metallisierung auf der von außen zu erkennenden Fläche des Moduls ist. Wie oben bereits beschrieben, soll damit die Bildung einer Stufe durch den Einbau des Sicherheitselementes in ein Chipmodul vermieden werden. Beispielsweise kann ein Chipmodul so ausgeführt werden, dass zwischen den Kontaktflächen gemäß ISO-7816 die Schichten aus Kupfer und Nickel/Gold auf einem Trägerband des Chipmoduls ausgespart werden und das Sicherheitselement in diese Aussparung eingebaut wird, so dass das Sicherheitselement eine Fläche ohne Stufen mit den umliegenden Kontakten bildet. Selbstverständlich ist auch darauf zu achten, dass eine evtl. notwendige Isolierung zwischen Sicherheitselement und Kontakten ebenfalls keine Stufe erzeugt.

Ein weiteres vorteilhaftes Ausführungsbeispiel zeichnet sich dadurch aus, dass das Sicherheitselement während dem Herstellungsprozess des Moduls aufgebracht wird. Dies ist insofern sehr vorteilhaft, da es so möglich ist ein Chipmodul mit Sicherheitselement in einer Produktionsanlage herzustellen. Der Einbau des Sicherheitselementes kann in den Herstellungsprozess des Chipmoduls integriert werden.

Ein weiteres vorteilhaftes Ausführungsbeispiel zeichnet sich dadurch aus, dass das Sicherheitselement im Rolle-zu-Rolle-Verfahren auf ein Trägerband mit Chipmodulen aufgebracht wird. Im Rolle-zu-Rolle-Verfahren wird das Sicherheitselement von einer Rolle abgewickelt und direkt auf das Chipmodul angeordnet und befestigt. Das Chipmodul ist gewöhnlich selbst auf einem Trägerband in Bandform angeordnet, wobei nach Herstellung des Chipmoduls mit Sicherheitselement das Trägerband wieder auf einer Rolle aufgewickelt wird, um die Rolle anderen Prozessschritten zur Verfügung zu stellen oder die fertigen Chipmodule mit Sicherheitselement werden aus dem Trägerband beispielsweise ausgestanzt um die Chipmodule in tragbaren Datenträger zu integrieren. Für das Chipmodul wird als Trägerbandmaterial vorzugsweise ein faserverstärkter Kunststoff, beispielsweise FR4 oder PI verwendet.

Ein weiteres vorteilhaftes Ausführungsbeispiel zeichnet sich dadurch aus, dass das Sicherheitselement während der Herstellung des Chipmoduls auf das Chipmodul aufgebracht werden kann. Das Chipmodul mit dem aufgebrachten Sicherheitselement wird anschließend in einen tragbaren Datenträger eingebaut. Alternativ ist es auch möglich, dass das Sicherheitselement auf ein Chipmodul aufgebracht wird, das bereits in einen tragbaren Datenträger eingebaut ist. Somit können bereits hergestellte Datenträger mit Chipmodul nachträglich mit einem Sicherheitselement auf dem Chipmodul ausgestattet werden. Für ein nachträgliches Aufbringen des Sicherheitselementes auf ein Chipmodul ist insbesondere ein Klebeverfahren oder jedes andere geeignete Verfahren möglich.

Ein weiteres vorteilhaftes Ausführungsbeispiel zeichnet sich dadurch aus, dass das Sicherheitselement mittels eines Klebstoffs und/ oder mittels Druck und Wärme auf dem Modul befestigt wird. Vorteilhafterweise wird das Sicherheitselement entweder durch ein Klebeverfahren oder ein Laminationsverfahren auf dem Chipmodul befestigt. Beim Klebeverfahren ist es möglich, dass ein geeigneter Kleber zuerst auf dem Chipmodul und/ oder auf dem Sicherheitselement aufgebracht wird um danach das Sicherheitselement auf das Chipmodul aufzubringen und es mit dem Chipmodul dauerhaft zu verbinden. Alternativ kann das Sicherheitselement mittels eines Laminationsverfahrens durch Druck und Wärme dauerhaft mit dem Chipmodul verbunden werden. Ferner sind alle anderen Verfahren geeignet, welche in der Lage sind das Sicherheitselement mit dem Chipmodul dauerhaft zu verbinden.

Ein weiteres vorteilhaftes Ausführungsbeispiel zeichnet sich dadurch aus, dass das Modul mit dem auf dem Modul aufgebrachten Sicherheitselement aus dem Trägerband ausgestanzt wird. Das Ausstanzen des Chipmoduls mit Sicherheitselement aus einem Trägerband ist eine Möglichkeit um die Chipmodule mit Sicherheitselement zu vereinzeln. Alternativ ist auch ein Laserverfahren oder jedes andere geeignete Verfahren zum Vereinzeln möglich.

Ein weiteres vorteilhaftes Ausführungsbeispiel zeichnet sich dadurch aus, dass das Sicherheitselement elektrisch leitend oder elektrisch isolierend ist. Das Sicherheitselement kann ferner vorteilhaft dazu verwendet werden, dass es beispielsweise einzelne Kontakte auf der von außen sichtbaren Fläche des Chipmoduls elektrisch leitend verbindet oder sie voneinander isoliert.

Ein weiteres vorteilhaftes Ausführungsbeispiel zeichnet sich dadurch aus, dass das Sicherheitselement mit oder ohne technische Hilfsmittel erkennbar ist. Ein besonderer Vorteil ist, dass je nach Anwendung ausgewählt werden kann, ob das Sicherheitselement beispielsweise alleine durch einen Blick mittels dem menschlichen Auge auf das Sicherheitselement als echtes Sicherheitselement identifiziert werden kann, oder ob dafür technische Hilfsmittel nötig sind, wie z.B. eine Lichtquelle, welche phosphoriszierende oder fluoriszierende Stoffe im Sicherheitselement bei Beleuchtung in einer Wellenlänge zum Leuchten anregt, die mit dem menschlichen Auge alleine nicht erkennbar ist, sondern dafür eine technische Einrichtung notwendig ist, die das Leuchten für den Menschen erkennbar macht.

Ein weiteres vorteilhaftes Ausführungsbeispiel zeichnet sich dadurch aus, dass das Sicherheitselement viele verschiedene geeignete Formen annehmen kann. Neben den im Anschluss genannten Ausführungsbeispielen ist jede andere geeignete Ausführungsform für ein Sicherheitselement möglich. Als Ausführungsformen für ein Sicherheitselement ist beispielsweise ein Sicherheitsfaden zu nennen. Ferner kann das Sicherheitselement optisch variable Elemente auf seiner Oberfläche aufweisen. Darüber hinaus kann das Sicherheitselement auf seiner Oberfläche eine Beschriftung in Form von Buchstaben, Zahlen, Symbolen etc. aufweisen. Die Beschriftung kann beispielsweise mittels einem Drucker oder einem Laser auf das Sicherheitselement aufgebracht werden. Das Sicherheitselement kann ferner als ein Hologramm ausgeführt sein und als solches mit der Funktion eines Sicherheitselements zur Individualisierung und zur Verhinderung von Fälschung verwendet werden.

Ferner wird die Aufgabe gelöst durch ein Chipmodul, welches die oben beschriebenen Merkmale aufweist.

Ferner wird die Aufgabe gelöst durch ein Verfahren zur Herstellung eines Datenträgers, wobei ein Chipmodul in den Datenträger eingebaut wird, wobei das Chipmodul der obigen Offenbarung entspricht.

Ferner wird die Aufgabe gelöst durch einen Datenträger, welcher ein Chipmodul gemäß obiger Offenbarung aufweist.

Im Folgenden werden Ausführungsbeispiele der Erfindung anhand der beigefügten Figuren detailliert beschrieben.
Figur 1 zeigt ein Trägerband mit Chipmodulen gemäß dem Stand der Technik.
Figur 2 zeigt einen erfindungsgemäßen Aufbau eines Chipmoduls in Schnittansicht.
Figur 3 zeigt die Herstellung eines erfindungsgemäßen Chipmoduls.
Figur 4 zeigt ein erfindungsgemäßes Chipmodul.
Figur 5 zeigt einen Datenträger mit einem erfindungsgemäßen Chipmodul.

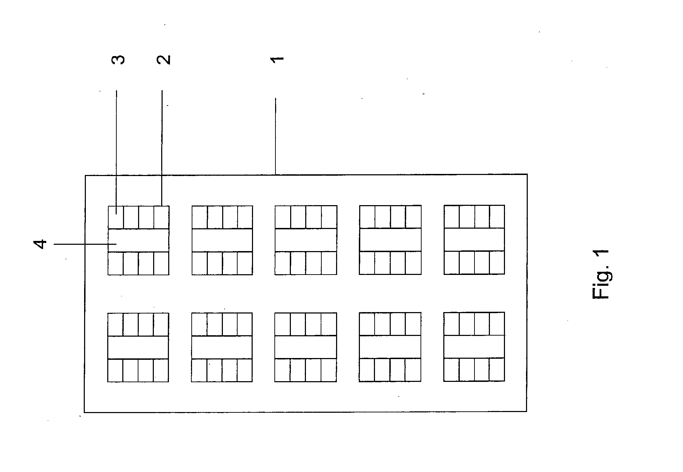

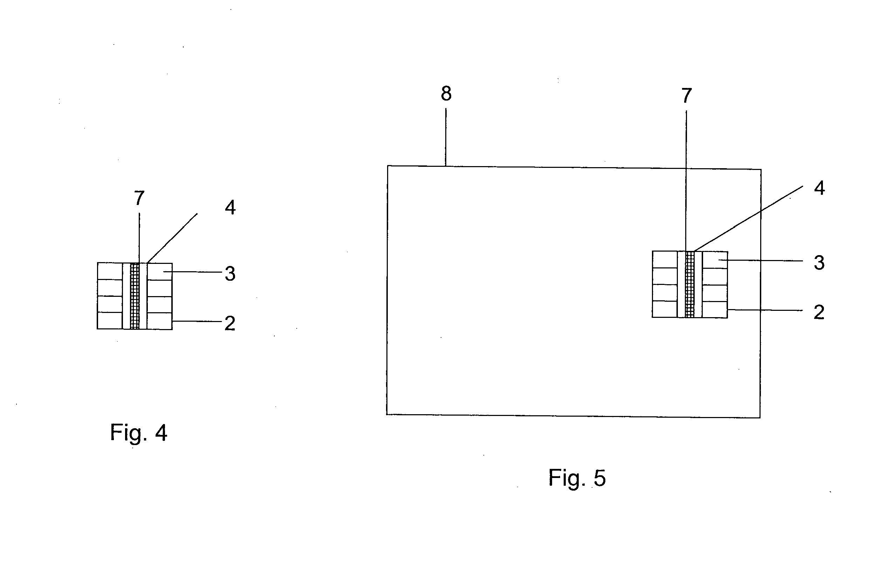

Die Figuren 1 und 5 sind aus Darstellungsgründen nicht massstabsgerecht gezeichnet. Sie dienen einem besseren Verständnis des Stands der Technik bzw. der vorliegenden Erfindung.

Figur 1 zeigt ein Trägerband 1 mit Chipmodulen 2 gemäß dem Stand der Technik. Auf dem Trägerband 1 befinden sich die Chipmodule 2 hintereinander in einer Reihe. Dabei sind mehrere Reihen nebeneinander möglich.

Jedes Chipmodul 2 umfasst in diesem Ausführungsbeispiel Kontaktflächen 3 gemäß ISO 7816. Alternativ ist es auch möglich, dass die Chipmodule 2 keine Kontaktflächen 3 aufweisen. Ferner ist es möglich, dass die Kontaktflächen 3 nicht der ISO 7816-Norm entsprechen, weil sie beispielsweise einer anderen Norm entsprechen. In einem Mittelbereich 4 sind keine Kontaktflächen 3 angeordnet. Aus optischen Gründen wird der Mittelbereich 4 im Stand der Technik aus optischen Gründen mit einer Metallisierungsschicht, z.B. aus Kupfer, Nickel oder Gold, überzogen.

Für die vorliegende Erfindung wird im Unterschied zum Stand der Technik beispielsweise der Mittelbereich 4 genutzt, insofern als im Mittelbereich 4 auf die Metallisierungsschicht verzichtet wird, damit ein Sicherheitselement im Mittelbereich 4 eingesetzt werden kann. Der Mittelbereich 4 und das Sicherheitselement sollten als vorteilhafte Ausführung der Erfindung bezüglich Breite und Höhe aufeinander abgestimmt sein, was aber nicht unbedingt notwendig ist. Vorteilhafterweise bildet das Sicherheitselement mit den Kontakten 3 eine Ebene. Alternativ kann das Sicherheitselement mit den Kontakten 3 keine Ebene bilden, so dass sich eine Stufe zwischen dem Sicherheitselement und den Kontakten 3 befindet. Vorteilhafterweise ist zwischen dem Sicherheitselement und den Kontakten 3 eine Lücke, welche so klein wie möglich ausgebildet ist. Alternativ kann sich zwischem dem Sicherheitselement und den Kontakten 3 eine Lücke befinden, welche ein vorgebbares Mass hinsichtlich Breite und Tiefe aufweist.

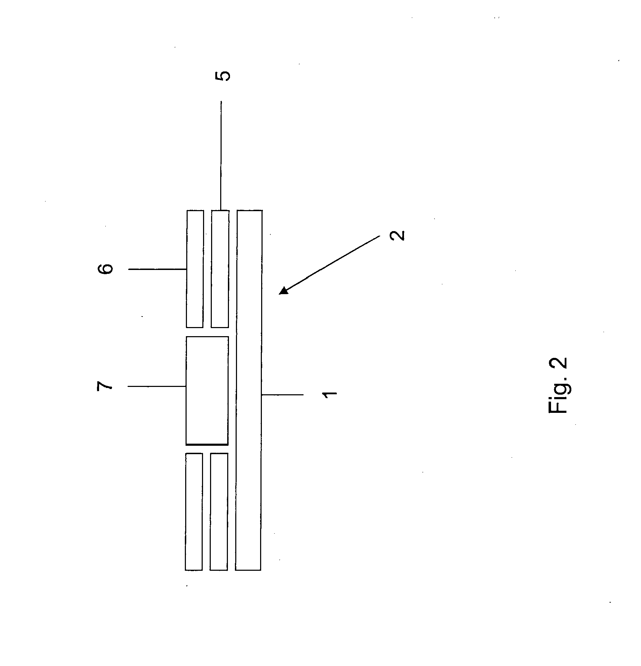

Figur 2 zeigt einen erfindungsgemäßen Aufbau eines Chipmoduls 2 in Schnittansicht. Das Chipmodul 2 ist symmetrisch aufgebaut. Auf dem Trägerband 1 befindet sich eine Kupferschicht 5 und eine Nickel/ Goldschicht 6. In der Mitte des Chipmoduls 2 befindet sich ein Sicherheitselement 7. Das Sicherheitselement 7 bildet mit der Nickel/Goldschicht 6 eine Ebene. Aus Darstellungsgründen wurden die einzelnen Schichten in Figur 2 zur besseren Erkennbarkeit so gezeichnet, dass ein Abstand dazwischen besteht. Der Abstand ist nicht massstabsgerecht gezeichnet.

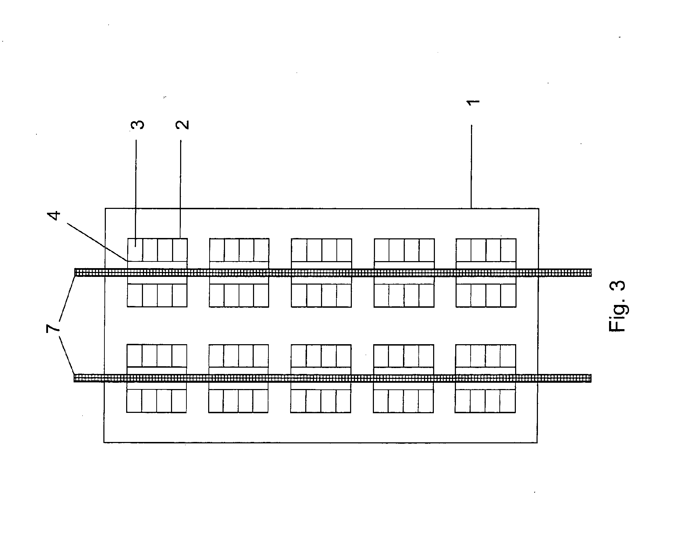

Figur 3 zeigt die Herstellung eines erfindungsgemäßen Chipmoduls 2. Bei der Herstellung eines erfindungsgemäßen Chipmoduls 2 wird ein Trägerband 1 zur Verfügung gestellt. Das Trägerband 1 weist Chipmodule 2 auf, welche erfindungsgemäß im Mittelbereich 4 eine Nut aufweisen. In diese Nut wird ein Sicherheitselement 7 eingebracht. Das Sicherheitselement 7 wird vorzugsweise von einer Rolle aus zur Verfügung gestellt. Das Sicherheitselement 7 wird mittels Kleber oder mittels Laminierung durch Druck und Wärme dauerhaft mit dem Chipmodul 2 verbunden. Nach dem Aufbringen und Verbinden des Sicherheitselements 7 mit dem Chipmodul 7 kann das Trägerband 1 wieder auf eine Rolle aufgewickelt werden oder die Chipmodule 2 mit Sicherheitselement 7 können aus dem Trägerband 1 vereinzelt, z.B. ausgestanzt werden um die Chipmodule 2 in tragbare Datenträger einzubauen.

Alternativ kann das Sicherheitselement 7 auch direkt auf der Oberfläche eines Chipmoduls 2 aufgebracht werden, falls sich in der Oberfläche keine Nut befindet, z.B. wenn auf ein Chipmodul, das bereits in einen Datenträger eingebaut ist, ein Sicherheitselement 7 nachträglich aufgebracht wird. Das Sicherheitselement 7 wird dabei so aufgebracht, dass ein Zugang zu den Kontakten 3 möglich ist, z.B. im Bereich des Mittelbereichs 4. Alternativ kann das Sicherheitselement 7 auch am äußeren Rand des Moduls 2 zumindest teilweise aufgebracht werden, so daß es beispielsweise eine geschlossene oder unterbrochene Umrandung der beispielsweise von außen sichtbaren Seite des Moduls 2 bildet. Die Kontakte 3 befinden sich dabei innerhalb der Umrandung. Die Umrandung kann alternativ auch von den Kontakten 3 umgeben sein, so dass sich außen die Kontakte 3 befinden und innen sich die Umrandung auf einer Seite, z.B. sichtbare oder nicht sichtbare Seite, des Moduls 2 befindet. Durch eine Isolierung wird verhindert, dass das Sicherheitselement 7 einen Kurzschluss zwischen den Kontakten 3 bewirkt.

Figur 4 zeigt ein erfindungsgemäßes Chipmodul 2 im vereinzelten Zustand, z.B. nach dem Ausstanzen aus dem Trägerband 1. Das erfindungsgemäße Chipmodul 2 weist Kontaktflächen 3 und das Sicherheitselement 7 auf. Das Sicherheitselement 7 ist vorteilhafterweise in einer Nut im Mittelbereich 4 angeordnet.

Figur 5 zeigt einen tragbaren Datenträger 8, z.B. eine Chipkarte, mit einem eingebauten erfindungsgemäßen Chipmodul 2. Hier ist deutlich zu sehen, dass das Chipmodul 2 neben den Kontaktflächen 3 das Sicherheitselement 7 im Mittelbereich 4 aufweist. Das erfindungsgemäße Chipmodul 2 kann durch im Stand der Technik bekannte Verfahren, z.B. Lamination, in den Datenträger 8 eingebaut werden.

### Bezugszeichenliste

- 1: Trägerband
- 2: Chipmodul
- 3: Kontaktfläche
- 4: Mittelbereich
- 5: Kupferschicht
- 6: Nickel/Goldschicht
- 7: Sicherheitselement
- 8: Datenträger

## Patentansprüche

1. Verfahren zur Herstellung eines Chipmoduls (2) für einen tragbaren Datenträger (8), **dadurch gekennzeichnet, dass** auf der Seitenfläche des Moduls (2) ein Sicherheitselement (7) angeordnet wird, die sich nach Einbau des Moduls (2) in den Datenträger (8) auf der Außenseite des Datenträgers (8) befindet und von außen zu erkennen ist.

2. Verfahren nach Anspruch 1, **dadurch gekennzeichnet, dass** sich das Sicherheitselement (7) mindestens über einen Teil der von außen zu erkennenden Fläche des Moduls (2) erstreckt.

3. Verfahren nach Anspruch 2, **dadurch gekennzeichnet, dass** in der von außen zu erkennenden Fläche des Moduls (2) das Sicherheitselement (7) und mindestens ein elektrisch leitfähiger Kontakt (3) angeordnet werden.

4. Verfahren nach einem der vorher gehenden Ansprüche, **dadurch gekennzeichnet, dass** das Sicherheitselement (7) neben und/ oder über dem mindestens einen Kontakt (3) angeordnet wird.

5. Verfahren nach einem der vorher gehenden Ansprüche, **dadurch gekennzeichnet, dass** das Sicherheitselement (7) so über dem mindestens einen Kontakt (3) angeordnet wird, dass mittels mindestens eines Durchgangslochs durch das Sicherheitselement (7) hindurch mit dem darunterliegenden mindestens einen Kontakt (3) eine leitende elektrische Verbindung hergestellt wird.

6. Verfahren nach einem der vorher gehenden Ansprüche, **dadurch gekennzeichnet, dass** das Sicherheitselement (7) in einer Vertiefung des Moduls (2) angeordnet wird.

7. Verfahren nach einem der vorher gehenden Ansprüche, **dadurch gekennzeichnet, dass** das Sicherheitselement (7) von dem mindestens einen Kontakt (3) elektrisch isoliert wird.

8. Verfahren nach einem der vorher gehenden Ansprüche, **dadurch gekennzeichnet, dass** die Dicke des Sicherheitselements (7) kleiner oder gleich oder größer als die Dicke einer Metallisierung (5, 6) auf der von außen zu erkennenden Fläche des Moduls (2) ist.

9. Verfahren nach einem der vorher gehenden Ansprüche, **dadurch gekennzeichnet, dass** das Sicherheitselement (7) während dem Herstellungsprozess des Moduls (2) aufgebracht wird.

10. Verfahren nach einem der vorher gehenden Ansprüche, **dadurch gekennzeichnet, dass** das Sicherheitselement (7) im Rolle-zu-Rolle-Verfahren auf ein Trägerband (1) mit Chipmodulen (2) aufgebracht wird.

11. Verfahren nach einem der vorher gehenden Ansprüche, **dadurch gekennzeichnet, dass** das Sicherheitselement (7) mittels eines Klebstoffs und/ oder mittels Druck und Wärme auf dem Modul (2) befestigt wird.

12. Verfahren nach einem der vorher gehenden Ansprüche, **dadurch gekennzeichnet, dass** das Modul (2) mit dem auf dem Modul (2) aufgebrachten Sicherheitselement (7) aus dem Träger (1) ausgestanzt wird.

13. Chipmodul (2), gemäß den Ansprüchen 1 bis 12.

14. Verfahren zur Herstellung eines Datenträgers (8), wobei ein Chipmodul (2) in den Datenträger (8) eingebaut wird, wobei das Chipmodul (2) den Ansprüchen 1 bis 13 entspricht.

15. Datenträger (8), welcher ein Chipmodul (2) gemäß den Ansprüchen 1 bis 13 aufweist.
